# EUROPÄISCHE PATENTANMELDUNG

(11) **EP 3 037 194 A1**
(43) Veröffentlichungstag der Anmeldung: **29.06.2016**
(21) Anmeldenummer: 15198348.3
(22) Anmeldetag: 08.12.2015
(51) Int. Cl.: B22F 5/00, B22F 5/04, C22C 14/00, B23P 15/00, B22F 3/105, B22F 3/22, B22F 3/24, C22F 1/18, F04D 29/02, F04D 29/28

(54) **TURBINENRAD UND VERFAHREN ZU SEINER HERSTELLUNG**

(30) Priorität: 22.12.2014 DE 102014226805
(71) Anmelder: ROBERT BOSCH GMBH, 70442 Stuttgart (DE)
(72) Erfinder: Reinsch, Bernd, 71642 Ludwigsburg (DE); Burghardt, Andreas, 70372 Stuttgart (DE)

(57) **Zusammenfassung**

Die Erfindung betrifft ein Verfahren zur Herstellung eines Turbinenrades (10) mit einer kriechbeständigen Nabe (20) und duktilen Schaufeln (31, 32, 33, 34). Diese umfasst das Bereitstellen eines Turbinenrades (10) mit einer Nabe (20) und mehreren Schaufeln (31, 32, 33, 34), welches aus einer TiAl-Legierung besteht, die 60 Vol.-% bis 100 Vol.% Körner mit einer volllamellaren Struktur aus einer α₂-Phase (Ti₃Al) und einer γ-Phase (TiAl) aufweist und daneben Körner mit anderen Phasen aufweisen kann, das Durchführen einer Wärmebehandlung der Schaufeln (31, 32, 33, 34), ohne dabei eine Wärmebehandlung der Nabe (20) durchzuführen, und das Erhalten des Turbinenrades (10) mit einer kriechbeständigen Nabe (20) und duktilen Schaufeln (31, 32, 33, 34). Ein mittels dieses Verfahrens herstellbares Turbinenrad (10) weist eine Nabe (10) auf, die aus einer TiAl-Legierung besteht, welche 60 Vol.-% bis 100 Vol.% Körner mit einer volllamellaren Struktur aus einer α₂-Phase und einer γ-Phase aufweist und daneben Körner mit anderen Phasen aufweisen kann, und es weist Schaufeln (31, 32, 33, 34) auf, die aus einer TiAl-Legierung bestehen, welche überwiegend Körner mit einem feinlamellaren Gefüge oder einem einphasigen Gefüge aufweist. Das Turbinenrad (10) kann insbesondere in einem Abgasturbolader verwendet werden.

## Beschreibung

Die vorliegende Erfindung betrifft ein Verfahren zur Herstellung eines Turbinenrades mit einer kriechbeständigen Nabe und duktilen Schaufeln. Weiterhin betrifft die Erfindung ein Turbinenrad mit einer kriechbeständigen Nabe und duktilen Schaufeln, das insbesondere mittels des erfindungsgemäßen Verfahrens herstellbar ist. Schließlich betrifft die Erfindung die Verwendung des erfindungsgemäßen Turbinenrades in einem Abgasturbolader.

### Stand der Technik

Für moderne Verbrennungsmotoren werden zunehmend Abgasturbolader eingesetzt, um deutlich sparsamere und dennoch dynamische und komfortable Diesel- und Ottomotoren zu realisieren. Als Material für das abgasseitige Turbinenrad werden Nickel-Basislegierungen verwendet. Zur Verbesserung der Dynamik rücken aber zunehmend Legierungen, die auf Titanaluminiden (TiAl) basieren, in den Fokus. Diese zeichnen sich durch eine niedrige Dichte von ca. 4 g/cm³ und durch eine hohe spezifische Festigkeit aus.

Turbinenräder aus TiAI-Legierungen können beispielsweise durch Feingussverfahren, das Metallpulverspritzgießen (MIM) oder durch spanende Bearbeitung von geschmiedeten oder pulvertechnisch durch heißisostatisches Pressen hergestellten Vorkörpern hergestellt werden. Im MIM-Verfahren hergestellte TiAI-Turbinenräder zeichnen sich durch dünne, gleichmäßig geformte Schaufeln, durch die Verarbeitbarkeit von nicht gießbaren, hochkriechbeständigen Legierungen sowie durch eine hohe Materialeffizienz und damit durch gegenüber feingegossenen TiAI-Turbinenrädern niedrigeren Kosten aus.

Für eine hohe Bauteilzuverlässigkeit müssen in einem TiAI-Turbinenrad allerdings sich ausschließende mechanische Eigenschaften realisiert werden. Um der Thermowechsel- und Erosionsbeanspruchung im Betrieb widerstehen zu können, ist in den Schaufeln ein Mindestmaß an Verformbarkeit bzw. Duktilität erforderlich, die aber mit einer niedrigen Kriechbeständigkeit verbunden ist. Umgekehrt ist für eine hohe Konturbeständigkeit des Turbinenrades eine hohe Kriechbeständigkeit der Turbinenradnabe essenziell, die typischerweise mit einer geringen Duktilität einhergeht. Die zur Einstellung unterschiedlicher Gefügezustände in der Radnabe und den Schaufeln erforderlichen Wärmebehandlungsparameter lassen sich nur schwer in die thermischen Prozesse der MIM-Prozesskette integrieren.

### Offenbarung der Erfindung

Das erfindungsgemäße Verfahren zur Herstellung eines Turbinenrades mit einer kriechbeständigen Nabe und duktilen Schaufeln umfasst die folgenden Schritte:
- Bereitstellen eines Turbinenrades mit einer Nabe und mehreren Schaufeln, welches aus einer TiAI-Legierung besteht, die 60 Vol.-% bis 100 Vol.% Körner mit einer volllamellaren Struktur aus einer α₂-Phase (Ti₃Al) und einer γ-Phase (TiAl) und daneben Körner mit anderen Phasen aufweisen kann, wenn es weniger als 100 Vol.% Körner mit der volllamellaren Struktur aufweist,
- Durchführen einer Wärmebehandlung der Schaufeln, ohne dabei eine Wärmebehandlung der Nabe durchzuführen, und
- Erhalten des Turbinenrades mit einer kriechbeständigen Nabe und duktilen Schaufeln.

Dieses Verfahren löst den Konflikt einer kriechbeständigen Nabe und duktiler Schaufeln, indem ein Turbinenrad erhalten wird, dessen Material eine hohe Kriechbeständigkeit und eine geringe Duktilität aufweist und dieses durch eine lokale, d.h. differenzielle Wärmebehandlung nur an den Schaufeln in einen Gefügezustand mit hoher Duktilität überführt wird, wobei die hohe Kriechbeständigkeit der Nabe erhalten bleibt. Die volllamellare Struktur aus einer α₂-Phase (Ti₃Al) und einer γ-Phase (TiAl) gewährleistet die hohe Kriechbeständigkeit der verwendeten TiAI-Legierung. Unter einer TiAI-Legierung wird dabei erfindungsgemäß insbesondere eine Legierung verstanden, die neben Titan und Aluminium maximal 30 Gew.-% weiterer Elemente enthält. Insbesondere enthält sie maximal 20 Gew.-% Niob sowie jeweils maximal 10 Gew.-% der Elemente Chrom, Mangan, Molybdän, Vanadium und Zirkonium. Weitere Elemente sind in Spuren von jeweils maximal 1 Gew.-% in der TiAI-Legierung enthalten.

Das bereitgestellte Turbinenrad wird vorzugsweise mittels Metallpulver-Spritzgießen (MIM) hergestellt. Hierbei handelt es sich um einen kombinierten Formgebungs- und Sinterprozess. Letzterer ist in technisch üblichen Sinteröfen realisierbar und ermöglicht es, das Turbinenrad mit einem kriechbeständigen Gefüge herzustellen, das 60 Vol.-% bis 100 Vol.% Körner mit einer volllamellaren Struktur aufweist und daneben Körner mit anderen Phasen aufweisen kann.

Die Schaufeln werden bei der Wärmebehandlung vorzugsweise auf eine Haltetemperatur im Bereich von 1.300°C bis 1.500°C aufgeheizt und anschließend insbesondere rasch abgekühlt. Dieses Verfahren ist besonders geeignet, um die Schaufeln in einen Gefügezustand mit höherer Duktilität zu überführen.

Um kritische thermomechanische Spannungen in den Schaufeln zu verhindern, ist es weiterhin bevorzugt, dass die Wärmebehandlung mit einem geeigneten radialen und axialen Wärmeeintragsprofil erfolgt.

Das Aufheizen erfolgt in einer Ausführungsform des erfindungsgemäßen Verfahrens an Luft. Dies ermöglicht bei sehr kurzen Prozesszeiten eine kostengünstige Durchführung des erfindungsgemäßen Verfahrens. Bei Aufheizen an Luft werden als Wärmequelle vorzugsweise Laserstrahlen, eine induktive Wärmequelle, eine Widerstandsheizung, eine Infrarot-Lichtquelle oder eine Kombination mehrerer dieser Wärmequellen verwendet, da diese ein schnelles Aufheizen ermöglichen. In einer anderen Ausführungsform des erfindungsgemäßen Verfahrens erfolgt das Aufheizen im Vakuum oder in einer inerten Atmosphäre. Unter einer inerten Atmosphäre wird dabei erfindungsgemäß eine Atmosphäre verstanden, welche aus Argon, Helium, Stickstoff oder einer Mischung mehrerer dieser Gase besteht. Die erfindungsgemäß verwendeten Atmosphären verhindern eine oberflächliche Oxidation der Schaufeln während der Wärmebehandlung. Bei Aufheizen im Vakuum oder in einer inerten Atmosphäre ist die verwendete Wärmequelle vorzugsweise ausgewählt aus einer induktiven Wärmequelle, Laserstrahlen, Elektronenstrahlen, einer Widerstandsheizung, einer Infrarot-Lichtquelle oder einer Kombination mehrerer dieser Wärmequellen.

Die Haltezeit der Wärmebehandlung beträgt vorzugsweise maximal 10 Minuten. Dies ist für die Erreichung der gewünschten hohen Duktilität ausreichend. In einigen Ausführungsformen des erfindungsgemäßen Verfahrens kann es sogar genügen, nach Aufheizung auf die Haltetemperatur sofort mit einer Abkühlung der Schaufeln zu beginnen, ohne diese für einen Zeitraum auf der Haltetemperatur zu halten. Die Haltezeit beträgt in solchen Ausführungsformen des erfindungsgemäßen Verfahrens also Null.

Im Bereich zwischen der Haltetemperatur und einer Temperatur von 1.000°C werden die Schaufeln vorzugsweise mit einer Geschwindigkeit im Bereich von 1 K/s bis 1.000 K/s abgekühlt. Diese schnelle Abkühlung der Schaufeln bewirkt die Ausbildung eines feinlamellaren Gefüges, das abhängig von der gewählten Haltetemperatur grobkörnig oder feinkörnig ist. Bei sehr hohen Abkühlraten kann die Bildung des lamellaren Gefüges sogar unterdrückt und ein einphasiges Gefüge erhalten werden.

Das Abkühlen der Schaufeln erfolgt in einer Ausführungsform des erfindungsgemäßen Verfahrens nur durch Abschalten der Beheizung. In einer anderen Ausführungsform des erfindungsgemäßen Verfahrens erfolgt das Abkühlen der Schaufeln durch gesteuertes Zurückfahren der Beheizung, um eine Abkühlrate zu erzielen, mit der einerseits eine vorteilhafte Gefügeausbildung erreicht und andererseits das Auftreten hoher thermomechanischer Spannungen verhindert wird. In einer weiteren Ausführungsform des erfindungsgemäßen Verfahrens wird die Abkühlung beschleunigt, indem zusätzlich zum Abschalten der Beheizung die Schaufeln mit einem gasförmigen oder flüssigen Kühlmedium in Kontakt gebracht werden. Als Kühlmedien sind Argon, Helium, Stickstoff, Luft, Wasser oder Öl besonders geeignet.

Um eine starke Erwärmung der Nabe während der Wärmebehandlung zu verhindern, ist es bevorzugt, dass während der Wärmebehandlung das Turbinenrad an seinem Radrücken mit einem gasförmigen oder flüssigen Medium gekühlt wird. Als Kühlmedien sind dieselben Kühlmedien besonders geeignet, die auch für das Abkühlen der Schaufeln besonders geeignet sind.

Um den gewünschten Zielzustand in den Schaufeln einzustellen, ist es bevorzugt, dass nach Abschluss der Wärmebehandlung eine Glühung der Schaufeln bei einer Temperatur oberhalb der α-Transus-Temperatur der TiAI-Legierung durchgeführt wird. Besonders bevorzugt erfolgt die Glühung bei einer Temperatur im Bereich von 1.000°C bis 1.400°C. Hierbei scheidet sich je nach Legierungszusammensetzung globulare γ-Phase (TiAl) zwischen den lamellaren oder einphasigen Körnern im Gefüge der Schaufeln ab.

Das erfindungsgemäße Turbinenrad mit einer kriechbeständigen Nabe und duktilen Schaufeln weist eine Nabe auf, die aus einer TiAI-Legierung besteht, welche Körner mit einer volllamellaren Struktur aus einer α₂-Phase und einer γ-Phase aufweist, und es weist Schaufeln auf, die aus einer TiAI-Legierung bestehen, welche Körner mit einem feinlamellaren Gefüge oder einem einphasigen Gefüge aufweist. Unter feinlamellar wird erfindungsgemäß verstanden, dass die Lamellenbreite im Bereich der erfindungsgemäß behandelten Schaufeln um mindestens einen Faktor von 2 kleiner ist als in der unbehandelten Nabe. Die unterschiedlichen Strukturen können beispielsweise mittels Lichtmikroskopie mit quantitativer Gefügeanalyse, mittels Rastermikroskopie mit Elementaranalytik oder mittels Röntgendiffraktometrie erkannt werden.

Als Maß für die Duktilität weisen die Schaufeln des erfindungsgemäßen Turbinenrades eine Bruchdehnung auf, die mindestens um einen Faktor von 2 größer ist als die der unbehandelten Nabe. Die Bruchdehnung kann an analog behandelten Vergleichsproben im Zugversuch bestimmt werden.

Die Schaufeln weisen vorzugsweise Körner mit einem feinlamellaren Gefüge auf, zwischen denen eine globulare γ-Phase vorliegt. Alternativ weisen die Schaufeln ein einphasiges Gefüge auf. Dies führt zu einer hohen Duktilität der Schaufeln.

Das erfindungsgemäße Turbinenrad ist insbesondere nach dem erfindungsgemäßen Verfahren herstellbar.

Das erfindungsgemäße Turbinenrad kann insbesondere in einem Abgasturbolader verwendet werden. Durch die Duktilität seiner Schaufeln kann es dort der Thermowechsel und Erosionsbeanspruchung im Betrieb widerstehen, wobei seine kriechfeste Nabe gleichzeitig eine hohe Konturstabilität des Turbinenrades gewährleistet.

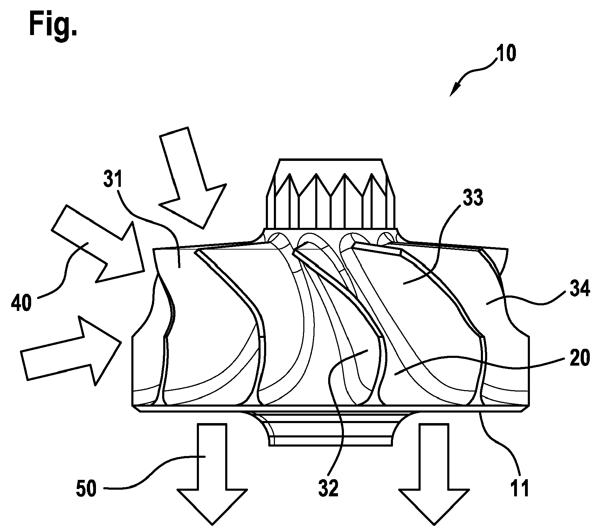

### Kurze Beschreibung der Zeichnung

Ein Ausführungsbeispiel der Erfindung ist in der Zeichnung dargestellt und wird in der folgenden Beschreibung näher erläutert.

Die Figur zeigt schematisch die Wärmebehandlung eines Turbinenrades in einem Verfahren gemäß einem Ausführungsbeispiel der Erfindung.

### Ausführungsbeispiel der Erfindung

In einem Ausführungsbeispiel des erfindungsgemäßen Verfahrens wird ein Turbinenrad 10 bereitgestellt, welches mittels Metallpulverspritzgießen hergestellt wurde und das aus einer TiAI-Legierung besteht, die 58,5 Gew.-% Ti, 30 Gew.-% Al, 11,4 Gew.-% Nb und jeweils <0,1 Gew.-% B und C enthält. Das Turbinenrad 10 besteht aus miteinander versinterten Körnern mit 95 Vol.-% einer volllamellaren Struktur aus einer α₂-Phase und einer γ-Phase. Daneben enthält es 5 Vol.-% Körner aus einer globularen γ-Phase. Es weist eine Nabe 20 und mehrere Schaufeln 31, 32, 33, 34 auf.

Das Turbinenrad 10 wird in Argongas als inerter Atmosphäre platziert. Dann werden seine Schaufeln 31, 32, 33, 34 mittels einer induktiven Wärmequelle 40 aufgeheizt, während gleichzeitig der Radrücken 11 des Turbinenrades 10 mittels eines kühlenden Argongasstroms 50 gekühlt wird. Die Aufheizung erfolgt auf eine Haltetemperatur von 1.400°C, bei welcher die Schaufeln 21, 22, 23, 24 für eine Haltezeit von 5 min gehalten werden. Anschließend wird die induktive Wärmequelle 40 abgeschaltet und die Schaufeln 31, 32, 33, 34 werden mittels eines kühlenden Argongasstroms mit einer Rate von 500 K/s auf eine Temperatur von 1.000°C abgekühlt.

Anschließend werden die Schaufeln 31, 32, 33, 34 einem Glühprozess bei einer Temperatur von 1.150°C für einen Zeitraum von 10 min unterzogen. Nach erneutem Abkühlen des Turbinenrades 10 wird ein erfindungsgemäßes Turbinenrad 10 erhalten, dessen Nabe 20 noch immer das ursprüngliche Gefüge mit Körnern mit einer volllamellaren Struktur aus einer α₂-Phase und einer γ-Phase und Körnern aus einer globularen γ-Phase aufweist und dessen Schaufeln 31, 32, 33, 34 ein Gefüge mit feinlamellaren Körnern ausgebildet haben, zwischen denen sich eine globulare γ-Phase ausgeschieden hat. Die Nabe 20 weist dadurch eine hohe Kriechbeständigkeit auf und die Schaufeln 31, 32, 33, 34 weisen eine hohe Duktilität auf. Das erhaltene Turbinenrad 10 kann in einem Abgasturbolader verwendet werden.

## Patentansprüche

1. Verfahren zur Herstellung eines Turbinenrades (10) mit einer kriechbeständigen Nabe (20) und duktilen Schaufeln (31, 32, 33, 34), umfassend die folgenden Schritte:
- Bereitstellen eines Turbinenrades (10) mit einer Nabe (20) und mehreren Schaufeln (31, 32, 33, 34), welches aus einer TiAI-Legierung besteht, die 60 Vol.-% bis 100 Vol.% Körner mit einer volllamellaren Struktur aus einer α₂-Phase und einer γ-Phase aufweist, und daneben Körner mit anderen Phasen aufweisen kann,
- Durchführen einer Wärmebehandlung der Schaufeln (31, 32, 33, 34), ohne dabei eine Wärmebehandlung der Nabe (20) durchzuführen, und
- Erhalten des Turbinenrades (10) mit einer kriechbeständigen Nabe (20) und duktilen Schaufeln (31, 32, 33, 34).

2. Verfahren nach Anspruch 1, **dadurch gekennzeichnet, dass** das bereitgestellte Turbinenrad (10) mittels Metallpulver-Spritzgießens hergestellt wird.

3. Verfahren nach Anspruch 1 oder 2, **dadurch gekennzeichnet, dass** die Schaufeln (31, 32, 33, 34) bei der Wärmebehandlung auf eine Haltetemperatur im Bereich von 1.300°C bis 1.500°C aufgeheizt werden.

4. Verfahren nach Anspruch 3, **dadurch gekennzeichnet, dass** das Aufheizen im Vakuum oder in Luft oder in einer inerten Atmosphäre durch eine Wärmequelle (40) erfolgt, die ausgewählt ist aus einer induktiven Wärmequelle, Laserstrahlen, Elektronenstrahlen, einer Widerstandsheizung, einer Infrarot-Lichtquelle oder einer Kombination mehrerer dieser Wärmequellen.

5. Verfahren nach Anspruch 3 oder 4, **dadurch gekennzeichnet, dass** die Haltezeit der Wärmebehandlung maximal 10 Minuten beträgt.

6. Verfahren nach einem der Ansprüche 3 bis 5, **dadurch gekennzeichnet, dass** die Schaufeln (31, 32, 33, 34) im Bereich zwischen der Haltetemperatur und einer Temperatur von 1.000°C mit einer Geschwindigkeit im Bereich von 1 K/s bis 1.000 K/s abgekühlt werden.

7. Verfahren nach einem der Ansprüche 1 bis 6, **dadurch gekennzeichnet, dass** das Turbinenrad (10) während der Wärmebehandlung an seinem Radrücken (11) mit einem gasförmigen oder flüssigen Medium (50) gekühlt wird.

8. Verfahren nach einem der Ansprüche 1 bis 7, **dadurch gekennzeichnet, dass** nach Abschluss der Wärmebehandlung eine Glühung der Schaufeln (31, 32, 33, 34) bei einer Temperatur unterhalb der α-Transus-Temperatur der TiAI-Legierung durchgeführt wird.

9. Verfahren nach Anspruch 8, **dadurch gekennzeichnet, dass** die Glühung bei einer Temperatur im Bereich von 1.000°C bis 1.300°C durchgeführt wird.

10. Turbinenrad (10) mit einer kriechbeständigen Nabe (20) und duktilen Schaufeln (31, 32, 33, 34), aufweisend
- eine Nabe (10), die aus einer TiAI-Legierung besteht, welche 60 Vol.-% bis 100 Vol.% Körner mit einer volllamellaren Struktur aus einer α₂-Phase und einer γ-Phase aufweist und daneben Körner mit anderen Phasen aufweisen kann, und
- Schaufeln (31, 32, 33, 34), die aus einer TiAI-Legierung bestehen, welche überwiegend Körner mit einem feinlamellaren Gefüge oder einem einphasigen Gefüge aufweist.

11. Turbinenrad (10) nach Anspruch 10, **dadurch gekennzeichnet, dass** die Schaufeln (31, 32, 33, 34) eine globulare γ-Phase (TiAl) aufweisen, welche zwischen den Körnern des feinlamellaren Gefüges vorliegt.

12. Turbinenrad (10) nach Anspruch 10 oder 11, **dadurch gekennzeichnet, dass** es nach einem Verfahren gemäß einem der Ansprüche 1 bis 9 herstellbar ist.

13. Verwendung eines Turbinenrades (10) nach einem der Ansprüche 10 bis 12 in einem Abgasturbolader.
